(19) Europäisches Patentamt
European Patent Office
Office européen des brevets

(11) **EP 2 627 728 B1**

(12) **EUROPEAN PATENT SPECIFICATION**

(45) Date of publication and mention
of the grant of the patent:
**20.11.2019 Bulletin 2019/47**

(21) Application number: **11779280.4**

(22) Date of filing: **14.10.2011**

(51) Int Cl.:
*C09K 8/58* *(2006.01)*     *C09K 8/592* *(2006.01)*

(86) International application number:
**PCT/US2011/056320**

(87) International publication number:
**WO 2012/051511 (19.04.2012 Gazette 2012/16)**

(54) **WATER INJECTION SYSTEMS AND METHODS**

WASSERINJEKTIONSSYSTEME UND VERFAHREN

SYSTÈMES ET PROCÉDÉS D'INJECTION D'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2010 US 393471 P**

(43) Date of publication of application:
**21.08.2013 Bulletin 2013/34**

(73) Proprietors:
• **Shell Oil Company
Houston, TX 77252-2463 (US)**
Designated Contracting States:
**SM**
• **Shell Internationale Research Maatschappij B.V.
2596 HR The Hague (NL)**

(72) Inventors:
• **LIGTHELM, Dirk Jacob
NL-2288 GD Rijswijk (NL)**
• **ROMANUKA, Julija
NL-2596 BL The Hague (NL)**
• **SUIJKERBUIJK, Bartholomeus Marinus
Josephus Maria
NL-3512 KB Utrecht (NL)**

(74) Representative: **Shell Legal Services IP
p/a Carel van Bylandtlaan 16
2596 HR Den Haag (NL)**

(56) References cited:
**WO-A1-89/08768         WO-A1-2010/092095
WO-A1-2010/092097**

• **ROBERTSON ET AL: "Low-Salinity
Waterflooding To Improve Oil Recovery -
Historical Field Evidence", SPE INTERNATIONAL
OIL AND GAS CONFERENCE AND EXHIBITION,
XX, XX, no. SPE 109965, 11 November 2007
(2007-11-11), pages 1-9, XP002540306,**
• **GARY R JERAULD ET AL: "Modeling Low-Salinity
Waterflooding", SPE INTERNATIONAL OIL AND
GAS CONFERENCE AND EXHIBITION, XX, XX,
no. SPE 102239, 24 September 2008 (2008-09-24),
pages 1000-1012, XP002540307,**

## Description

Field of Invention:

The present disclosure relates to methods for injecting water into a hydrocarbon bearing formation.

Background:

Oil accumulated within a subterranean oil-bearing formation is recovered or produced therefrom through wells, called production wells, drilled into the subterranean formation. A large amount of such oil may be left in the subterranean formations if produced only by primary depletion, i.e., where only formation energy is used to recover the oil. Where the initial formation energy is inadequate or has become depleted, supplemental operations, often referred to as secondary, tertiary, enhanced or post-primary recovery operations, may be employed. In some of these operations, a fluid is injected into the formation by pumping it through one or more injection wells drilled into the formation, oil is displaced within and is moved through the formation, and is produced from one or more production wells drilled into the formation. In a particular recovery operation of this sort, seawater, field water or field brine may be employed as the injection fluid and the operation is referred to as a waterflood. The injection water may be referred to as flooding liquid or flooding water as distinguished from the in situ formation, or connate water. Fluids injected later can be referred to as driving fluids.

Water may be injected by itself, or as a component of miscible or immiscible displacement fluids. Sea water (for offshore wells) and brine produced from the same or nearby formations (for onshore wells) may be most commonly used as the water source.

Hiorth, Cathles, and Madland in their article "The Impact of Pore Water Chemistry on Carbonate Surface Charge and Oil Wettability" published February 24, 2010 in Transp Porous Med (2010, 85:1-21) disclosed that water chemistry has been shown experimentally to affect the stability of water films and the sorption of organic oil components on mineral surfaces. When oil is displaced by water, water chemistry has been shown to impact oil recovery. At least two mechanisms could account for these effects, the water chemistry could change the charge on the rock surface and affect the rock wettability, and/or changes in the water chemistry could dissolve rock minerals and affect the rock wettability. The explanations need not be the same for oil displacement of water as for water imbibition and displacement of oil. This article investigates how water chemistry affects surface charge and rock dissolution in a pure calcium carbonate rock similar to the Stevns Klint chalk by constructing and applying a chemical model that couples bulk aqueous and surface chemistry and also addresses mineral precipitation and dissolution. They perform calculations for seawater and formation water for temperatures between 70 and 130°C. The model they construct predicts the surface potential of calcite and the adsorption of sulfate ions from the pore water. The surface potential changes are not able to explain the observed changes in oil recovery caused by changes in pore water chemistry or temperature. On the other hand, chemical dissolution of calcite has the experimentally observed chemical and temperature dependence and could account for the experimental recovery systematics. Based on this preliminary analysis, they conclude that although surface potential may explain some aspects of the existing spontaneous imbibitions data set, mineral dissolution appears to be the controlling factor.

PCT Patent Application Publication WO 2010/092095 discloses a method for enhancing oil recovery (EOR) from a limestone or dolomite formation containing crude oil and connate water.

PCT Patent Application Publication WO 2010/092097 discloses a method for enhancing recovery of crude oil from a porous subterranean formation of which the pore spaces contain crude oil and connate water comprises: - determining the Ionic Strength (Mol/l) of the connate water; and - injecting an aqueous displacement fluid having a lower Ionic Strength (Mol/l) than the connate water into the formation, which aqueous displacement fluid furthermore has an Ionic Strength below 0.15 Mol/l. Injection of an aqueous displacement fluid with lower Ionic Strength than the connate water improves oil recovery (IOR).

US Patent Application Publication US 2003/0230535 discloses a method and well for desalinating saline aquifer water, wherein saline aquifer water flows from a subsurface aquifer layer directly into a downhole aquifer inflow region of a desalinated water production well in which a downhole assembly of one or more desalination and/or purification membranes is arranged, which separate the saline aquifer water into a primary desalinated water stream which is produced through the well to surface and a secondary concentrated brine reject stream, which can be disposed into a subsurface brine disposal zone.

US Patent Application Publication US 2009/0308609 discloses a system comprising a well drilled into an underground formation; a production facility at a topside of the well; a water production facility connected to the production facility; wherein the water production facility produces water by removing some ions and adding an agent which increases the viscosity of the water and/or increases a hydrocarbon recovery from the formation, and injects the water into the well.

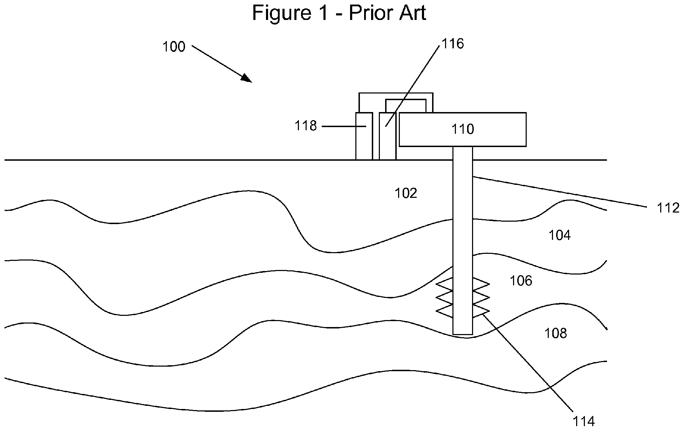

Referring to Figure 1, there is illustrated prior art system 100. System 100 includes body of water 102, underground formation 104, underground formation 106, and underground formation 108. Production facility 110 may be provided at the surface of body of water 102. Well 112 traverses body of water 102 and formation 104, and has openings in formation 106. A portion of formation 106 may be fractured and/or perforated as shown at 114.

Oil and gas may be produced from formation 106 through well 112, to production facility 110. Gas and liquid may be separated from each other, gas may be stored in gas storage 116 and liquid may be stored in liquid storage 118.

There is a need in the art for improved systems and methods for producing oil and/or gas from a subterranean formation. In particular, there is a need in the art for systems and methods for providing an improved water flood, for example in a carbonate formation.

Summary of the Invention

The invention provides a method for enhancing recovery of crude oil from a porous subterranean carbonate formation of which the pore spaces contain crude oil and connate water, the method comprising determining an ionic strength of the connate water; passing sea water through a nano-filtration membrane to provide an aqueous displacement fluid having an ionic strength from 0.1 to less than 0.5% of the ionic strength of the connate water and having an $SO_4^{2-}$ concentration of from 20 to 150 ppm; and injecting an aqueous displacement fluid having a lower ionic strength than the connate water into the formation.

Brief Description of the Drawings

Figure 1   illustrates a prior art oil and gas production system.
Figure 2   illustrates an oil and gas production system.
Figure 3   illustrates a water processing system.
Figure 4   illustrates a water processing system.

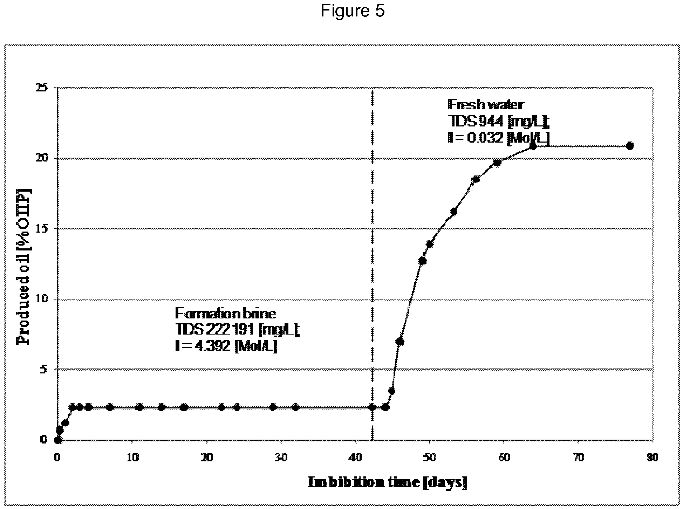

Figure 5   illustrates results from an experiment.

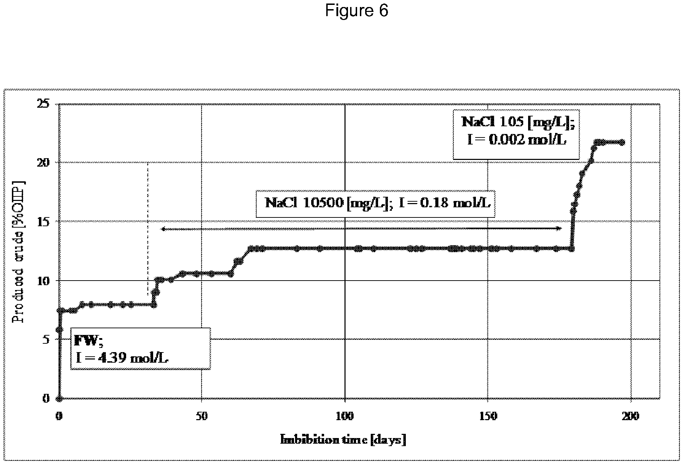

Figure 6   illustrates results from an experiment.

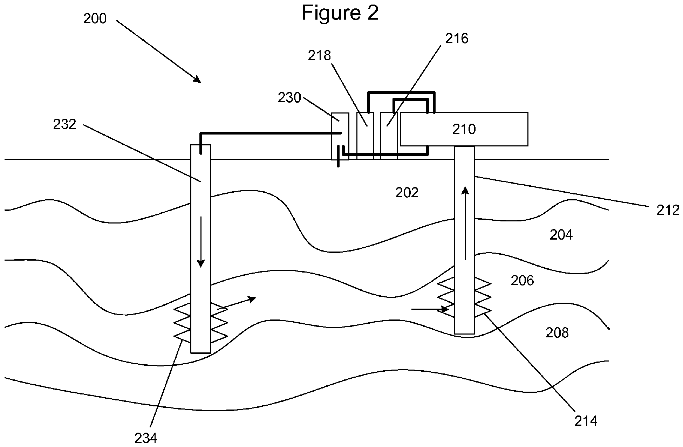

Referring now to Figure 2, system 200 is illustrated. System 200 includes formation 202, formation 204, formation 206, and formation 208. Production facility 210 may be provided at the surface of formation 202. Well 212 traverses formation 202 and formation 204, and has openings at formation 206. Portions of formation may be fractured and/or perforated as shown at 214. As oil and gas is produced from formation 206 it enters portions 214, and travels up well 212 to production facility 210. Gas and liquid may be separated, and gas may be sent to gas storage 216, and liquid may be sent to liquid storage 218, and water may be sent to water production 230.

Production facility 210 is able to process water, for example from formation 202 and/or well 212 or other sources of water such as seawater, lakes, rivers, gray water from a sewage treatment plant, municipal water supply, or others, which may be processed and stored in water production 230. Water from well 212 may be sent to water production 230. Processed water may be pumped down well 232, to fractured portions 234 of formation 206. Water traverses formation 206 to aid in the production of oil and gas, and then the water the oil and gas may be all produced to well 212, to production facility 210. Water may then be recycled, for example by returning water to water production 230, where it may be processed, then re-injected into well 232.

Hydrocarbons, such as oil and/or gas, may be recovered from the earth's subsurface formation 206 through production wellbore 212 that penetrate hydrocarbon-bearing formations or reservoirs. Perforations may be made from the production wellbore 206 to portions of the formation 214 to facilitate flow of the hydrocarbons from the hydrocarbon-bearing formations to the production wellbores. Water may be injected under pressure into injection zones 234 formed in the subsurface formation 206 to stimulate hydrocarbon production through the production wells in a field.

Water may be injected by itself as a component of miscible or immiscible displacement fluids. Sea water (for offshore wells) and brine produced from the same or nearby formations (for onshore wells) may be used as the water source. Such water may contain amounts (concentration) of precursor ions, such as divalent sulfate ($SO_4^{-2}$), which may form insoluble salts when they come in contact with cations, such as $Ba^{++}$, $Sr^{++}$ and $Ca^{++}$, resident in the formations. The resulting salts ($BaSO_4$, $SrSO_4$ and $CaSO_4$) can be relatively insoluble at subsurface formation temperature and pressure. Such salts may precipitate out of the solution. The precipitation of the insoluble salts may accumulate and consequently plug the subsurface fluid passageways. The plugging effects may be most severe in passageways in the formation near the injection well 232 and at the perforations of the production well 212. Solubility of the insoluble salts may further decrease as the injection water is produced to the surface through the production well 212, due to the reduction of the temperature and pressure as the fluids move to the surface through the production well. Subsurface or formation fluid passageways may include pores in the formation matrix, fractures, voids, cavities, vugs, perforations and fluid passages through the wells, including cased and uncased wells, tubings and other fluid paths in the wells. Precipitates may include insoluble salts, crystals or scale. Plugging may include reduction in the porosity and/or permeability of fluid passageways and the tubulars used in producing the well fluids and processing of those fluids. Injection water may include any fluid containing water that is injected into a subsurface formation to facilitate recovery of hydrocarbons from subsurface formations.

One purpose of injection well 232 is to aid the flow of hydrocarbons from the reservoir to production well 212. One method is to inject water under pressure adjacent to a production zone to cause the hydrocarbons trapped in the formation 206 to move toward the production well 212.

Formation:

Formation 206 may include carbonate rocks such as limestone and/or dolostone, which are primarily oil wet.

In addition to oil and/or gas, formation 206 may also include water with various salts and other dissolved solids, such as a connate water with a total dissolved solids (TDS) of 500 ppm or more, for example a TDS of 1,000ppm to about 100,000ppm.

In general, a high TDS connate water provides for a primarily oil wet carbonate rock, while providing a lower TDS injection water serves to shift the carbonate rock towards more water wet and less oil wet. An injection water may be used that has a TDS from about 0.001% to about 20% of the TDS of the connate water, for example from about 0.01% to about 10%, or from about 0.1% to about 5%.

Figure 3:

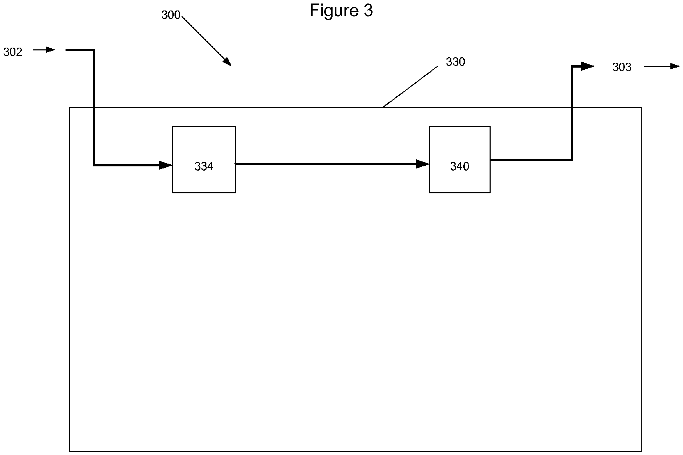

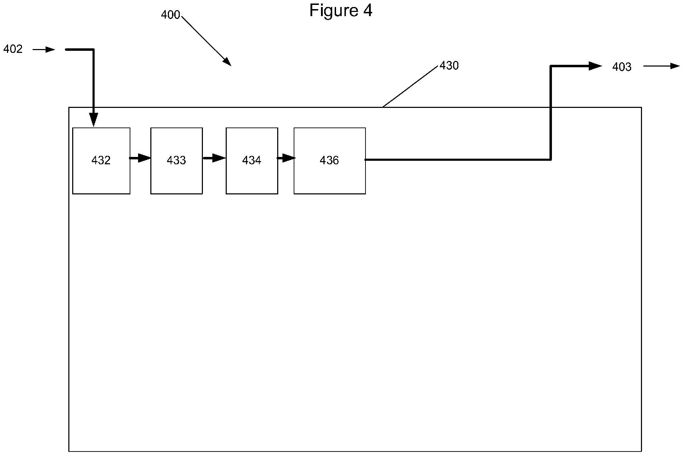

Referring now to Figure 3, a system 300 for water production 330 is illustrated. The method and systems used to process water, for example by lowering the TDS of the water is not critical. Suitable methods are set forth below with reference to Figures 3 and 4.

Water production 330 has an input of unprocessed water, for example water from a body of water, a sea, a lake, a river, a water well, connate water, city water supply, or another water supply. At 334 some cations may be removed from raw water 302, for example multivalent cations, such as divalent or trivalent cations. At 340, monovalent cations may be removed from raw water 302. Processed water 303 is then produced from water production 330.

Figure 4:

Referring now to Figure 4, system 400 for water production 430 is illustrated. Water production 430 has an input of unprocessed water 402, for example water from the body of water from a well, sea water, city water supply, or another water supply. At 432, primary filtration may be accomplished to remove solids from water. At 433 sulphates (SO$_4$) may be removed. At 434, some divalent cations may be removed, for example from about 60 to about 99% of the divalent cations present. Divalent cations which may be removed include magnesium (Mg), calcium (Ca), iron (Fe) and/or strontium (Sr).

In some embodiments, 433 and/or 434 may be performed with nanofiltration membrane systems.

At 436, some monovalent ions may be removed, for example from about 60 to about 99% of the cations present, such as sodium (Na), and/or potassium (K), along with the associated anions, for example chloride, fluoride, and/or bromide. Processed water 403 may be produced by water production 430.

Water production 330 and/or 430 may use a membrane based system, for example reverse osmosis (RO) and/or nanofiltration (NF) technology, such as are used for seawater desalination, filtration, and/or purification, although other water treatment systems may be used.

System 400 may include unprocessed water 402, from an aqueous feed source such as seawater from the ocean, or any saline water source having some divalent and monovalent ions, such as produced water from a well. As one example, raw seawater may be taken from the ocean, either from a sea well or from an open intake, and initially subjected to primary filtration 432 using a large particle strainer (not shown), and/or multimedia filters, which might be typically sand and/or anthracite coal, optionally followed by a cartridge filtration.

A mechanical method, such as passing the unprocessed water 402 through a nano-filtration membrane, may be used to remove ions from the water at the surface before injecting it into the wellbore and/or adding an agent 440. Sea water may contain from about 2700 to about 2800 ppm of divalent SO$_4^-$. The nano-filtration membrane process may reduce this concentration 433 to about 20 to about 150 ppm. A 99% reduction in sulfate content may be achievable.

Processes 334, 433, and/or 434 may use a NF device, such as a membrane. Processes 334 and/or 436 may use a RO device, such as a membrane.

Processed water 303 and/or 403 may be combined with one or more water soluble solvents, for example, dimethyl ether, and then injected into a formation for enhanced oil recovery. Suitable water soluble solvents are disclosed in co-pending U.S application 2013048279.

In addition, a mixture of processed water with an agent for increasing the viscosity, may be injected into a formation, for example a water soluble polymer.

In addition, a mixture of processed water with an agent for decreasing the interfacial tension between the oil and water, may be injected into a formation, for example a surfactant.

The present invention is defined by the subject-matter of the claims.

Benefits:

At least two mechanisms could account for these effects, the water chemistry could change the charge on the rock surface and affect the rock wettability, and/or changes in the water chemistry could dissolve rock minerals and affect the rock wettability.

The addition of low salinity water may cause a oil wet reservoir to convert into a more water wet reservoir and release the oil.

Low salinity water may lead to increased oil recovery for a reservoir.

Low salinity water may lead to increased oil recovery for a high salinity reservoir.

Water may be commonly injected into subterranean hydrocarbon-bearing formations by itself or as a component of miscible or immiscible displacement fluids to recover hydrocarbons therefrom. Unprocessed water 302 and/or 402 can be obtained from a number of sources including brine produced from the same formation, brine produced from remote formations, or sea water. All of these waters may have a high ionic content relative to fresh water.

A low ionic strength water may be used as processed water or a processed water mixture 303 and/or 403, for example a low ionic strength water from an aquifer, stream, lake, river, city water supply, or gray water from a sewage treatment plant, or other sources as are known in the art.

Processed water or a processed water mixture 303 and/or 403 may be injected into formation 206, produced from the formation 206, and then recovered from the oil and gas, for example, by a centrifuge or gravity separator, and then processing the water at water production 230, then the processed water or a processed water mixture 303 and/or 403 may be re-injected into the formation 206.

Processed water or a processed water mixture 303 and/or 403 may be injected into an oil-bearing formation 206, optionally preceded by and/or followed by a flush, such as with seawater, a surfactant solution, a hydrocarbon fluid, a brine solution, or fresh water.

Processed water or a processed water mixture 303 and/or 403 may be used to improve oil recovery. The processed water or a processed water mixture 303 and/or 403 may be utilized to drive or push the now oil bearing flood out of the reservoir, thereby "sweeping" crude oil out of the reservoir. Oil may be recovered at production well 212 spaced apart from injection well 232 as processed water or a processed water mixture 303 and/or 403 pushes the oil out of the pores in formation 206 and to the production well 212. Once the oil / drive fluid reaches the surface, it may be put into holding tanks 218, allowing the oil to separate from the water through the natural forces of gravity.

The amount of oil recovered may be measured as a function of the original oil in place (OOIC). The amount of oil recovered may be greater than about 5% by weight of the original oil in place, for example 10% or greater by weight of the original oil in place, or 15% or greater by weight of the original oil in place.

The process and system may be useful for the displacement recovery of petroleum from oil-bearing formations. Such recovery encompasses methods in which the oil may be removed from an oil-bearing formation through the action of a displacement fluid or a gas.

Other uses for the processed water or a processed water mixture 303 and/or 403 prepared by the process and system of the invention include near wellbore injection treatments, and injection along interiors of pipelines to promote pipelining of high viscosity crude oil. The processed water or a processed water mixture 303 and/or 403 can also be used as hydraulic fracture fluid additives, fluid diversion chemicals, and loss circulation additives, to mention a few.

The present invention is defined by the subject-matter of the claims.

There is disclosed a method for enhancing recovery of crude oil from a porous subterranean carbonate formation of which the pore spaces contain crude oil and connate water, the method comprising determining an ionic strength of the connate water; and injecting an aqueous displacement fluid having a lower ionic strength than the connate water into the formation. The aqueous displacement fluid has an Ionic Strength (I) less than about 10% of an Ionic Strength of the connate water. The aqueous displacement fluid has an Ionic Strength (I) less than about 0.5% of an Ionic Strength of the connate water. The method further comprises determining a total level of multivalent cations (Moles/Volume) of the connate water; and injecting an aqueous displacement fluid having a lower total level of multivalent cations (Moles/Volume) than the connate water. The aqueous displacement fluid comprises at least one additive selected from a surfactant, a foaming agent, a water soluble polymer, and a water soluble solvent such as dimethyl ether. The aqueous displacement fluid comprises steam and/or water obtained from an aquifer, river, lake, sea, treated sewage effluent, or ocean. The formation is a mineral-bearing carbonate formation. In some embodiments, the aqueous displacement fluid comprises a viscosifying polymer. In some embodiments, the aqueous displacement fluid has a viscosity level above 1 mPa.s and comprises at least 200 ppm (mass) of viscosifying polymer. The viscosifying polymer comprises a hydrolyzed polyacrylamide. The water is treated such that it is converted into an aqueous displacement fluid having an ionic strength less than about 5% of an ionic strength of the connate water. The water is treated such that it is converted into an aqueous displacement fluid having an ionic strength from about 0.1% to about 20% of an ionic strength of the connate water. The water is treated such that it is converted into an aqueous displacement fluid having a total dissolved solids level from about 0.1% to about 20% of a total dissolved solids level of the connate water.

The present invention is defined by the subject-matter of the claims.

Definitions:

In this application, the terms are defined as follows:

Ionic Strength (I) -a function of the concentration of all ions present in that solution expressed in (Mol/l) wherein

$$I = \frac{1}{2} \cdot \sum_i C_i \cdot z_i^2 \text{ ,}$$

with $C_i$ being molar concentration (Mol/l) and $z_i$ being the valency of the specific ion and I being the summation over all anions and cations in the solution.

Connate Water - liquids that are trapped in the pores of a subterranean formation. These liquids are largely composed of water, but also contain many mineral components such as ions in solution.

Total Dissolved Solids - (abbreviated TDS) is a measure of the combined content of all inorganic and organic substances contained in a liquid in: molecular, ionized or micro-granular (colloidal sol) suspended form. The solids must be small enough to survive filtration through a sieve the size of two micrometer.

EXAMPLES

Figure 5:

Results from spontaneous imbibition experiments on Middle Eastern limestone core material at 70 °C (Sample1). Dashed line indicates a point in time when change of the brine in the Amott cell took place.

A spontaneous imbibition test was carried out at 70 °C on Middle Eastern limestone core Sample 1 of about 50 mD permeability and 22 % porosity. The oil viscosity was 3.2 mPas. The ionic strength of the formation brine was 4.39 mol/L, while fresh water, used as wettability modifying brine, had ionic strength of 0.32 mol/L. Upon change from the formation water to the fresh water, there was additional oil recovery of 20 % indicating wettability change towards more water-wet. Hence, reduction of ionic strength of the brine by a factor of 14 leads to wettability modification.

Figure 6:

Results from spontaneous imbibition experiments on Middle Eastern limestone core material at 70 °C using solution of NaCl as an imbibition brine.

Second experiment was performed using limestone rock from Middle East (Sample 2) prepared under identical conditions as limestone Sample 1, i.e. the same formulation of formation brine, the same crude oil and identical experimental conditions. Sample 2 has permeability of 3.5 mD and porosity of 29.2 %.

After finalizing spontaneous imbibition by formation water (I = 4.39 mol/L), the plug was surrounded by the solution of sodium chloride (NaCl) with concentration of 10500 mg/L and lower ionic strength of 0.18 mol/L. Upon brine change additional oil recovery of 5 % and hence wettability modification was observed. After this step surrounding solution was refreshed and still additional oil recovery was observed. This is an experimental artifact caused by mixing of highly salinity formation brine and lower salinity solution of NaCl inside the porous media and hence an increase in the effective salinity of the imbibing brine. After the solution was refreshed one more time, the oil production ceased due to absence of salinity difference.

At the very last stage of the test the plug was surrounded by the NaCl solution with concentration of 105 mg/L and ionic strength of 0.002 mol/L. Again additional oil recovery of 10 % was observed. This experiment demonstrates that reduction of the ionic strength of the imbibing brine as compared to the formation brine causes wettability modification of the carbonate core material. Wettability modification takes place upon reduction of ionic strength of the brine by a factor of 24 or further reduction by a factor of 2000.

**Claims**

1. A method for enhancing recovery of crude oil from a porous subterranean carbonate formation of which the pore spaces contain crude oil and connate water, the method comprising:

    determining an ionic strength of the connate water;
    passing sea water through a nano-filtration membrane to provide an aqueous displacement fluid having an ionic strength from 0.1% to less than 0.5% of the ionic strength of the connate water and having an $SO_4^{2-}$ concentration of from 20 to 150 ppm; and
    injecting the aqueous displacement fluid into the formation.

2. The method of claim 1, wherein the method further comprises:

    determining a total level of multivalent cations (Moles/Volume) of the connate water; and
    injecting an aqueous displacement fluid having a lower total level of multivalent cations (Moles/Volume) than the connate water.

3. The method of claim 1 or 2, wherein the aqueous displacement fluid comprises steam and/or water obtained from sea, or ocean.

4. The method of any of claims 1-3, wherein the formation is a mineral-bearing carbonate formation.

5. The method of any of claims 1-4, wherein the aqueous displacement fluid comprises a viscosifying polymer.

6. The method of claim 5, wherein the viscosifying polymer comprises a hydrolyzed polyacrylamide.

7. The method of any of claims 1-6, wherein the water is treated to provide an aqueous displacement fluid having a total dissolved solids level from 0.1% to about 20% of the total dissolved solids level of the connate water.

**Patentansprüche**

1. Verfahren zum Verbessern der Gewinnung von Rohöl aus einer porösen unterirdischen Carbonatformation, deren Porenräume Rohöl und konnates Wasser enthalten, wobei das Verfahren Folgendes umfasst:

   Bestimmen einer Ionenstärke des konnaten Wassers;
   Führen von Meerwasser durch eine Nanofiltrationsmembran, um ein wässriges Verdrängungsfluid mit einer Ionenstärke von 0,1 % bis weniger als 0,5 % der Ionenstärke des konnaten Wassers und einer $SO_4^{2-}$-Konzentration von 20 bis 150 ppm bereitzustellen; und
   Injizieren des wässrigen Verdrängungsfluids in die Formation.

2. Verfahren nach Anspruch 1, wobei das Verfahren ferner Folgendes umfasst:

   Bestimmen eines Gesamtgehalts von mehrwertigen Kationen (Mol/Volumen) des konnaten Wassers; und
   Injizieren eines wässrigen Verdrängungsfluids mit einem niedrigeren Gesamtgehalt von mehrwertigen Kationen (Mol/Volumen) als das konnate Wasser.

3. Verfahren nach Anspruch 1 oder 2, wobei das wässrige Verdrängungsfluid Dampf und/oder Wasser umfasst, die aus dem Meer oder Ozean gewonnen werden.

4. Verfahren nach einem der Ansprüche 1-3, wobei die Formation eine mineralhaltige Carbonatformation ist.

5. Verfahren nach einem der Ansprüche 1-4, wobei das wässrige Verdrängungsfluid ein viskosifizierendes Polymer umfasst.

6. Verfahren nach Anspruch 5, wobei das viskosifizierende Polymer ein hydrolysiertes Polyacrylamid umfasst.

7. Verfahren nach einem der Ansprüche 1-6, wobei das Wasser behandelt wird, um ein wässriges Verdrängungsfluid mit einem Gesamtgehalt von gelösten Feststoffen von 0,1 % bis etwa 20 % des Gesamtgehalts von gelösten Feststoffen des konnaten Wassers bereitzustellen.

**Revendications**

1. Procédé pour améliorer la récupération de pétrole brut à partir d'une formation de carbonate souterraine porale dont les espaces poraux contiennent du pétrole brut et de l'eau connée, le procédé consistant à :

   déterminer une force ionique de l'eau connée ;
   faire passer de l'eau de mer à travers une membrane de nanofiltration pour fournir un fluide de déplacement aqueux ayant une force ionique de 0,1 % à moins de 0,5 % de la force ionique de l'eau connée et ayant une concentration en $SO_4^{2-}$ de 20 à 150 ppm ; et
   injecter le fluide de déplacement aqueux dans la formation.

2. Procédé selon la revendication 1, dans lequel le procédé consiste en outre à :

   déterminer un niveau total de cations multivalents (Moles/Volume) de l'eau connée ; et
   injecter un fluide de déplacement aqueux ayant un niveau total de cations multivalents (Moles/Volume) inférieur à celui de l'eau connée.

3. Procédé selon la revendication 1 ou 2, dans lequel le fluide de déplacement aqueux comprend de la vapeur et/ou de l'eau provenant de la mer ou de l'océan.

4. Procédé selon l'une quelconque des revendications 1 à 3, dans lequel la formation est une formation de carbonate minéralisée.

5. Procédé selon l'une quelconque des revendications 1 à 4, dans lequel le fluide de déplacement aqueux comprend un polymère viscosifiant.

6. Procédé selon la revendication 5, dans lequel le polymère viscosifiant comprend un polyacrylamide hydrolysé.

7. Procédé selon l'une quelconque des revendications 1 à 6, dans lequel l'eau est traitée pour fournir un fluide de déplacement aqueux ayant un niveau total de solides dissous de 0,1 % à environ 20 % du niveau total de solides dissous de l'eau connée.

## Figure 1 - Prior Art

Figure 2

Figure 3

302

300

330

303

334

340

Figure 4

402

400

430

403

432  433  434  436

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010092095 A
- WO 2010092097 A
- US 20030230535 A
- US 20090308609 A
- US 2013048279 A

**Non-patent literature cited in the description**

- **HIORTH ; CATHLES ; MADLAND.** The Impact of Pore Water Chemistry on Carbonate Surface Charge and Oil Wettability. *Transp Porous Med,* 24 February 2010, vol. 85, 1-21